# EUROPEAN PATENT SPECIFICATION

(11) **EP 3 362 726 B1**
(45) Date of publication and mention of the grant of the patent: **09.12.2020**
(21) Application number: 16791073.6
(22) Date of filing: 12.10.2016
(51) Int. Cl.: F16L 37/00, F16L 41/08, F16L 37/252

(54) **AN ASSEMBLY METHOD FOR CONNECTING A SMALL DIAMETER SECONDARY PIPE TO A MAIN SUPPLY PIPE**
MONTAGEVERFAHREN ZUM VERBINDEN EINES NEBENROHRS MIT KLEINEM DURCHMESSER MIT EINEM HAUPTVERSORGUNGSROHR
PROCÉDÉ DE MONTAGE POUR LIAISON D'UN TUYAU SECONDAIRE DE PETIT DIAMÈTRE À UN TUYAU D'ALIMENTATION PRINCIPAL

(30) Priority: 12.10.2015 US 201562240088 P
(43) Date of publication of application: 22.08.2018
(73) Proprietor: Elysee Piping Systems Limited, London NW8 9TT (GB)
(72) Inventor: PROTOPAPAS, Panos, 1022 Nicosia (CY)
(74) Representative: Müller Schupfner & Partner Patent- und Rechtsanwaltspartnerschaft mbB
(86) International application number: PCT/IB2016/001465
(87) International publication number: WO 2017/064552

(56) References cited:
- WO-A2-2007/042000
- DE-A1- 1 550 137
- DE-U1- 29 604 662
- FR-A1- 2 845 148
- US-A- 4 320 911
- US-B1- 6 669 239

## Description

The present invention relates to an assembly method for connecting a small diameter secondary pipe (typically about 6mm) to a main supply pipe (typically about 20-40 mm).

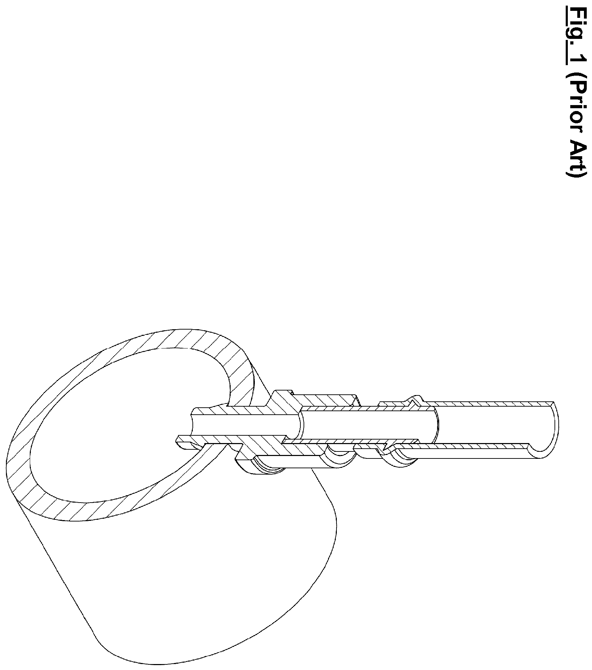

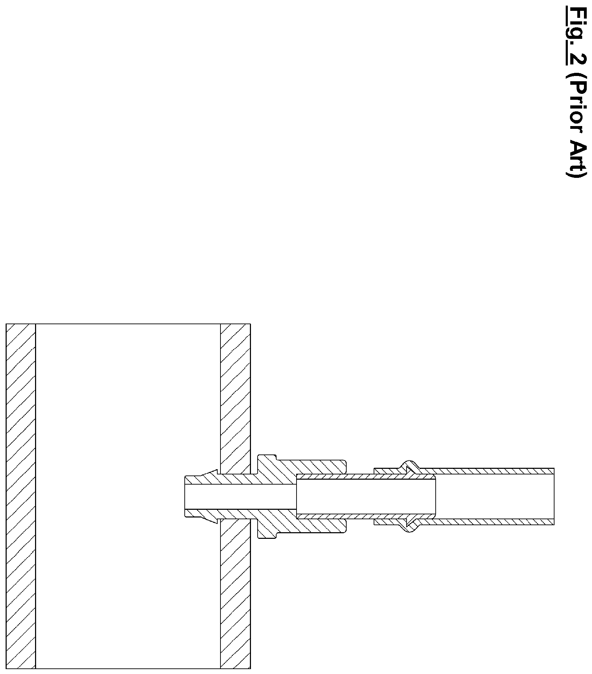

Due to the difference of the diameters between the two pipes, standard connection fittings are not typically used. Instead, the secondary pipe is installed into the main supply pipe using a standard plastic collar connector pushed into a standard plunger connector which is protruding from the surface of the main supply pipe, as illustrated in Figs. 1-2. The standard collar connector is of slightly larger outer diameter than the inside diameter of the plunger and is held in place purely by the friction between the two parts. Thus it is possible for the collar to slide out of the plunger when under long term pressure.

Also, as a result of the protrusion from the surface of the main supply pipe, there is a great risk of damaging the connector during transport or when rolling pipes with the connector installed on it.

Document DE29604662 U1 discloses a connection assembly to connect a small diameter pipe to a concrete pipe of larger diameter, wherein the arrangement comprises two intermediate connection elements, that create a tight connection between the pipes.

Documents DE1550137 A1, WO2007042000 A2, US4320911 A, US6669239 B1 and FR2845148 A1 disclose further technical solutions for sealed connections between pipe elements.

The invention will be described in further detail below and with reference to the attached drawings in which:
Figs. 1-2 illustrate a connection fitting according to the prior art;
Fig. 3 illustrates a cross-sectional side view of an assembly of the present invention;
Fig. 4 illustrates a side view of the locking mechanism oriented in the open position;
Fig. 5 illustrates a bottom view of the locking mechanism oriented in the open position;
Fig. 6 illustrates an exploded bottom view of the locking mechanism oriented in the locked position;
Fig. 7 illustrates a side view of the locking mechanism in the locked position; and
Fig. 8 illustrates a bottom view of the locking mechanism in the locked position. Detailed Description of the Invention

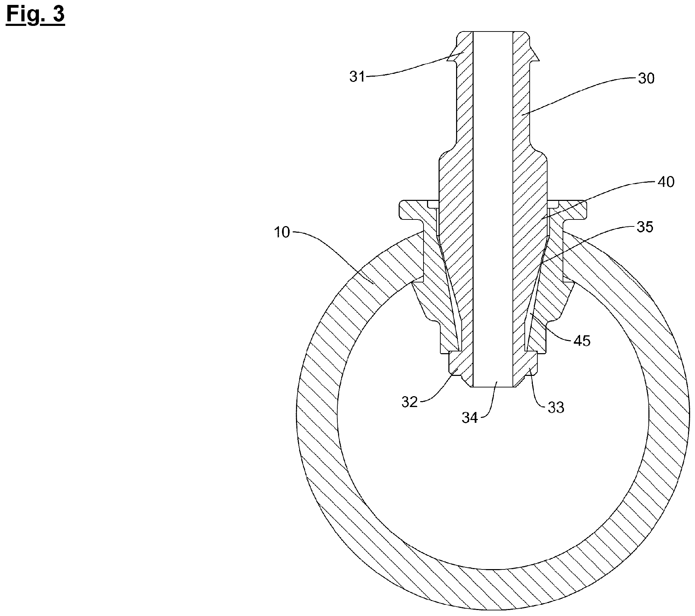

As shown in Fig. 3, the assembly of the present invention consists of two parts - the collar 30 and the plunger 40. The plunger 40 is inserted into the main supply pipe 10 and the collar 30 is connected to the secondary pipe 20 via a standard barbed connection 31 where the internal diameter of the secondary pipe 20 is a little smaller than the external diameter of the collar 30, and thus the elasticity of the secondary pipe together with the tooth of the standard barbed connection ensures a safe and leak tight connection of the two.

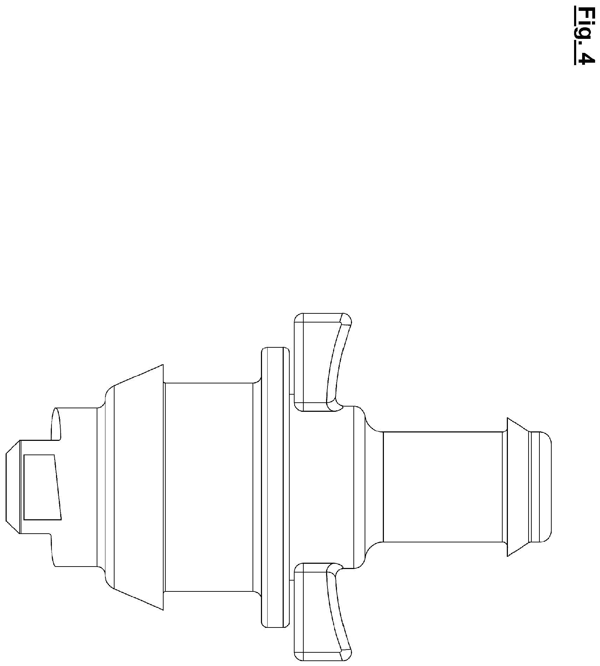

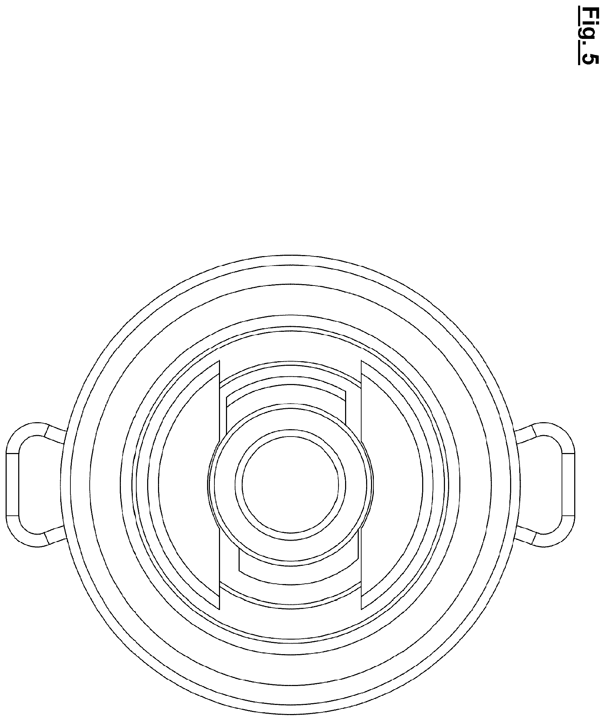

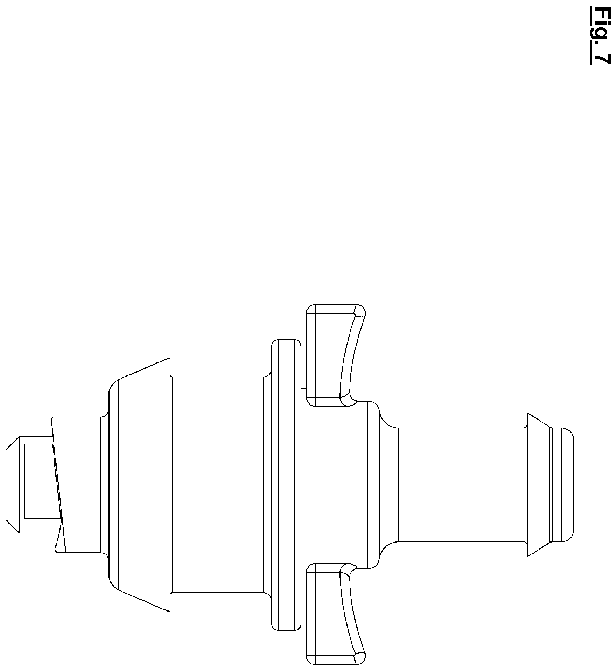

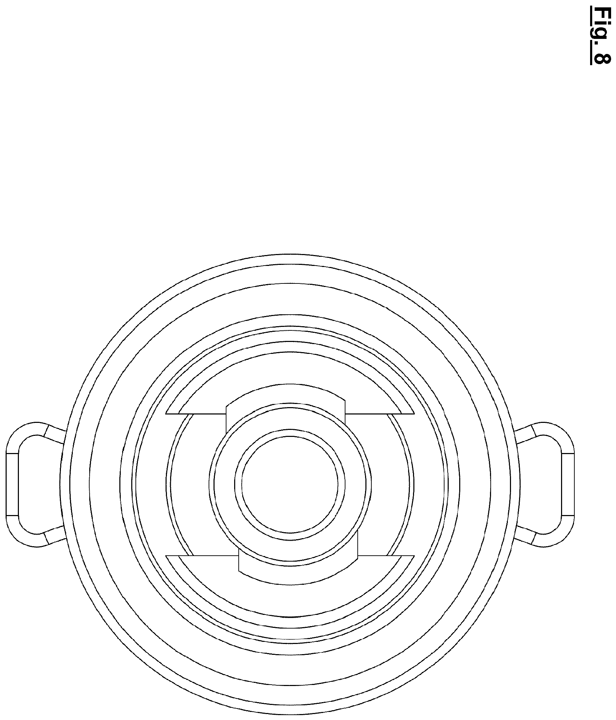

The assembly of the invention allows for two alternative orientations, depending on the position of the collar with respect to the plunger. As discussed below, the "locked" position is shown in Figs. 3 and 6-8. The "open" position is shown in Figs. 4-5.

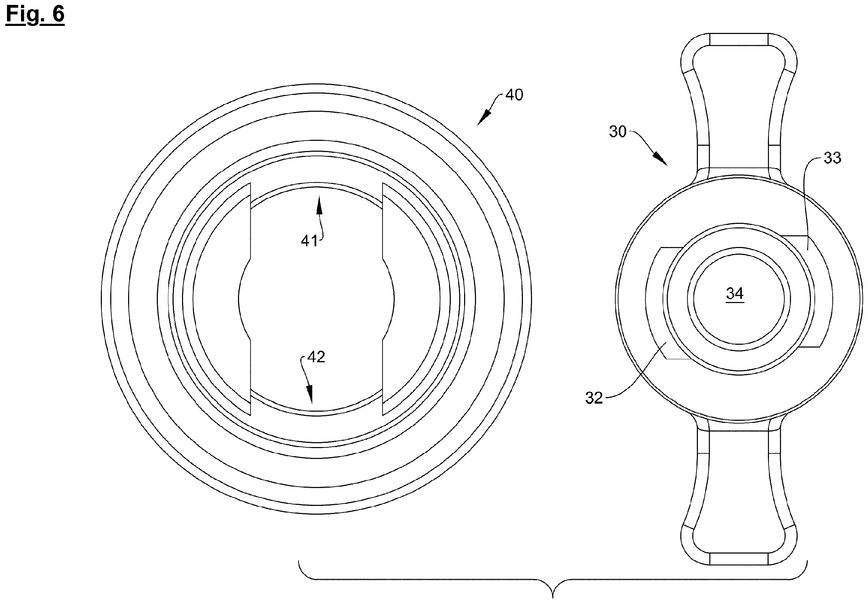

As shown in Fig. 6, the collar 30 has two teeth 32, 33 on the lower end, while the plunger 40 has two corresponding slots 41, 42 which are configured to allow the teeth 32, 33 to slide through the body of the plunger when the parts are oriented in the open position as shown in Figs. 4-5. The two parts are connected by inserting the collar 30 into the plunger, advancing the teeth 32, 33 all the way through the slots 41, 42 in the body of the plunger 40, and securing the collar 30 by rotating it clockwise so that the collar's teeth 32, 33 rest against the lower surface of the plunger adjacent the slots (see Figs. 3, 7 and 8). The lower surface of the plunger 40 is made at a small angle as is the corresponding upper surface of each tooth 32, 33 of the collar 30 so that the continued clockwise rotation also increases the friction between the two surfaces to secure the parts in place so that the parts will be securely connected even under long term pressure. To further ensure adequate sealing between the collar 30 and the plunger 40 when connected, the connecting surfaces 35, 45 (see Fig. 3), respectively, of the two parts are conical and, as the teeth 32, 33 on the collar are configured so that some pressure is required to turn and secure the connection of the two parts, the same pressure is also exerted to the two conical surfaces, thus creating a sealing engagement between these connecting surfaces.

By rotating the collar 30 counter-clockwise so that the teeth 32, 33 are positioned within the slots 41, 42, while the securing friction is also released, the collar 30 can be pulled and released from the plunger 40 (see Figs. 4-5). Then, the plunger can either be sealed by an alternate collar (not shown) which is closed as a cap or attached to another secondary pipe (not shown).

The relatively short protrusion of the plunger 40 of the assembly of the present invention and its simplicity ensures that the invention is not easily damaged during rearrangements / re-locations or transport, even when the plunger remains connected to the main pipe.

It is thus seen from the preceding that the problems set forth above are solved in a particularly effective, simple and inexpensive way, with a considerable advantage to the user.

In another embodiment, the parts can be configured so that the direction of rotation is opposite from that which is described above in order to move the parts from the locked position to the open position and vice versa.

The above disclosure is intended to be illustrative and not exhaustive. This description will suggest many modifications, variations, and alternatives that may be made by those of ordinary skill in this art without departing from the scope of the invention as defined in the claims.

Those familiar with the art may recognize other equivalents to the specific embodiments described above. Accordingly, the scope of the invention is not limited to the foregoing specification and attached drawings.

## Claims

1. A connection assembly, comprising a plunger (40) connectable to a main supply pipe (10), and a collar (30) connectable to a small diameter secondary pipe (20), the plunger (40) being connected to the collar (30),
wherein the collar (30) has two teeth (32, 33) on the lower end and the plunger (40) has two corresponding slots (41, 42)
wherein in an open position the slots (41, 42) allow the teeth (32, 33) to slide through the body of the plunger (40),
wherein the collar (30) is adapted to be rotated clockwise relative to the plunger (40) to be brought to a locked position,
wherein in the locked position the teeth (32, 33) rest against a lower surface of the plunger (40) adjacent the slots (41, 42) and a water tight sealing between the plunger (40) and the collar (30) is provided,
wherein the lower surface of the plunger (40) and the upper surfaces of each tooth (32, 33) are arranged with an angle, such that the continued rotation from the open to the locked position increases the friction between the upper surfaces of each tooth (32, 33) and the lower surface of the plunger (40)
wherein a connecting surfaces (35) of the collar (30) and a connecting surface (45) of the plunger (40) are conical, such that rotating the collar (30) to the locked position requires a pressure to turn and secure the connection of the collar (30) and the plunger (40) and the same pressure is also exerted to the two conical surfaces (35, 45).

2. The connection assembly of one of the preceding claims,
wherein the main supply pipe (10) has a diameter of 20-40 mm.

3. The connection assembly of one of the preceding claims,
wherein the secondary pipe (20) has a diameter of 6 mm.

4. An internal assembly connection method for assembling the connection assembly of any of claims 1 - 3, according to which a plunger (40) connected to a main supply pipe (10) is connected to a collar (30),
wherein the collar (30) is also connected to a small diameter secondary pipe (20) in a way that can be assembled and disassembled without damaging the connecting parts,
wherein a water tight sealing between the plunger (40) and the collar (30) is provided through pressure on conical sealing surfaces (35, 45) of the plunger (40) and the collar (30),
wherein the pressure on the conical surfaces (35, 45) is provided by a locking mechanism comprising of teeth (32, 33) at the collar (30) and a lower surface of the plunger (40).

## Patentansprüche

1. Verbindungsanordnung, umfassend einen Kolben (40), der mit einem Hauptversorgungsrohr (10) verbindbar ist, und eine Manschette (30), die mit einem Nebenrohr (20) mit kleinem Durchmesser verbindbar ist, wobei der Kolben (40) mit der Manschette (30) verbunden ist,
wobei die Manschette (30) zwei Zacken (32, 33) am unteren Ende und der Kolben (40) zwei entsprechende Schlitze (41, 42) aufweist
wobei es die Schlitze (41, 42) ermöglichen, dass die Zacken (32, 33) durch den Körper des Kolbens (40) gleiten in einer offenen Position,
wobei die Manschette (30) zur Drehung im Uhrzeigersinn relativ zu dem Kolben (40), um in eine verriegelte Position gebracht zu werden, ausgelegt ist,
wobei die Zacken (32, 33) in der verriegelten Position an einer unteren Fläche des Kolbens (40) angrenzend an die Schlitze (41, 42) anliegen, und eine wasserdichte Abdichtung zwischen dem Kolben (40) und der Manschette (30) bereitgestellt ist,
wobei die untere Fläche des Kolbens (40) und die oberen Flächen eines jedes jeden Zackens (32, 33) in einem Winkel so angeordnet sind, dass die fortgesetzte Drehung aus der offenen in die verriegelte Position die Reibung zwischen den oberen Flächen jedes Zackens (32, 33) und der unteren Fläche des Kolbens (40) erhöht
wobei eine Verbindungsfläche (35) der Manschette (30) und eine Verbindungsfläche (45) des Kolbens (40) konisch sind, so dass das Drehen der Manschette (30) in die verriegelte Position einen Druck erfordert, um die Verbindung der Manschette (30) und des Kolbens (40) zu drehen und zu sichern, und der gleiche Druck auch auf die beiden konischen Flächen (35, 45) ausgeübt wird.

2. Verbindungsanordnung nach einem der vorangehenden Ansprüche, wobei das Hauptversorgungsrohr (10) einen Durchmesser von 20-40 mm aufweist.

3. Verbindungsanordnung nach einem der vorangehenden Ansprüche, wobei das Nebenrohr (20) einen Durchmesser von 6 mm aufweist.

4. Inneres Verbindungsmontageverfahren für die Montage der Verbindungsanordnung nach einem der Ansprüche 1 - 3, wonach ein mit einer Hauptversorgungsleitung (10) verbundener Kolben (40) mit einer Manschette (30) verbunden wird,
wobei die Manschette (30) auch mit einem Nebenrohr (20) mit kleinem Durchmesser in einer Weise verbunden wird, dass ohne Beschädigung der Verbindungsteile montiert und demontiert werden kann,
wobei eine wasserdichte Abdichtung zwischen dem Kolben (40) und der Manschette (30) durch Druck auf konische Dichtflächen (35, 45) des Kolbens (40) und der Manschette (30) bereitgestellt wird,
wobei der Druck auf die konischen Flächen (35, 45) durch einen Verriegelungsmechanismus bereitgestellt wird, bestehend aus Zacken (32, 33) an der Manschette (30) und einer unteren Fläche des Kolbens (40).

## Revendications

1. Assemblage de connexion, comprenant un plongeur (40) pouvant être connecté à un tube d'alimentation principal (10), et un collier (30) pouvant être connecté à un tube secondaire de petit diamètre (20), le plongeur (40) étant connecté au collier (30),
dans lequel le collier (30) a deux dents (32, 33) sur l'extrémité inférieure et le plongeur (40) a deux fentes correspondantes (41, 42), dans lequel, dans une position ouverte, les fentes (41, 42) permettent aux dents (32, 33) de coulisser à travers le corps du plongeur (40),
dans lequel le collier (30) est adapté pour être mis en rotation dans le sens des aiguilles d'une montre par rapport au plongeur (40) pour être amené dans une position bloquée,
dans lequel, dans la position bloquée, les dents (32, 33) reposent contre une surface inférieure du plongeur (40) adjacente aux fentes (41, 42) et une étanchéité à l'eau est assuré entre le plongeur (40) et le collier (30),
dans lequel la surface inférieure du plongeur (40) et les surfaces supérieures de chaque dent (32, 33) sont agencées sous un angle, de sorte que la poursuite de la rotation depuis la position ouverte jusqu'à la position bloquée augmente la friction entre les surfaces supérieures de chaque dent (32, 33) et la surface inférieure du plongeur (40),
dans lequel une surface de connexion (35) du collier (30) et une surface de connexion (45) du plongeur (40) sont coniques, de sorte que la mise en rotation du collier (30) vers la position bloquée requiert une pression pour tourner et fixer la connexion du collier (30) et du plongeur (40), et la même pression est également exercée sur les deux surfaces coniques (35, 45).

2. Assemblage de connexion selon l'une des revendications précédentes,
dans lequel le tube d'alimentation principal (10) a un diamètre de 20 à 40 mm.

3. Assemblage de connexion selon l'une des revendications précédentes,
dans lequel le tube secondaire (20) a un diamètre de 6 mm.

4. Procédé de connexion d'assemblage interne pour assembler l'assemblage de connexion selon l'une quelconque des revendications 1 à 3, dans lequel un plongeur (40) connecté à un tube d'alimentation principal (10) est connecté à un collier (30),
dans lequel le collier (30) est également connecté à un tube secondaire de petit diamètre (20) d'une manière qui peut être assemblée et désassemblée sans endommager les parties de connexion,
dans lequel une étanchéité à l'eau entre le plongeur (40) et le collier (30) est assuré par une pression sur des surfaces d'étanchéité coniques (35, 45) du plongeur (40) et du collier (30),
dans lequel la pression sur les surfaces coniques (35, 45) est assurée par un mécanisme de blocage constitué de dents (32, 33) au niveau du collier (30) et d'une surface inférieure du plongeur (40).
